# EUROPÄISCHE PATENTSCHRIFT

(11) **EP 2 814 700 B1**
(45) Veröffentlichungstag und Bekanntmachung des Hinweises auf die Patenterteilung: **21.06.2017**
(21) Anmeldenummer: 13704588.6
(22) Anmeldetag: 13.02.2013
(51) Int. Cl.: B60R 25/40, B60R 25/24

(54) **TRAGBARER IDENTIFIKATIONSGEBER FÜR EIN PASSIVES ZUGANGSSYSTEM EINES KRAFTFAHRZEUGS UND VERFAHREN ZUM ENERGIESPARENDEN BETREIBEN DES IDENTIFIKATIONSGEBERS**
PORTABLE IDENTIFICATION TRANSMITTER FOR A PASSIVE ACCESS SYSTEM OF A MOTOR VEHICLE AND METHOD FOR THE ENERGY-SAVING OPERATION OF THE IDENTIFICATION TRANSMITTER
CAPTEUR D'IDENTIFICATION PORTATIF POUR SYSTÈME D'ACCÈS PASSIF À UN VÉHICULE AUTOMOBILE ET PROCÉDÉ ÉCONOME EN ÉNERGIE PERMETTANT DE FAIRE FONCTIONNER LE CAPTEUR D'IDENTIFICATION

(30) Priorität: 14.02.2012 DE 102012101124
(43) Veröffentlichungstag der Anmeldung: 24.12.2014
(73) Patentinhaber: Huf Hülsbeck & Fürst GmbH & Co. KG, 42551 Velbert (DE)
(72) Erfinder: STEEGMANN, Bernd, 42579 Heiligenhaus (DE); ZILLER, Boris, 40885 Ratingen (DE)
(74) Vertreter: Zenz Patentanwälte Partnerschaft mbB
(86) Internationale Anmeldenummer: PCT/EP2013/052830
(87) Internationale Veröffentlichungsnummer: WO 2013/120877

(56) Entgegenhaltungen:
- DE-A1-102004 023 197
- DE-A1-102010 017 493
- DE-A1-102010 036 787
- US-A1- 2002 109 582

## Beschreibung

Die Erfindung betrifft einen tragbaren Identifikationsgeber für ein passives Zugangssystem eines Kraftfahrzeugs, der in einem Gehäuse eine Versorgungsbatterie, einen Mikrocontroller, von dem Mikrocontroller gesteuerte HF-Sende- und -Empfangsschaltungen zur Kommunikation mit einem kraftfahrzeugseitigen Steuergerät und eine mit dem Mikrocontroller gekoppelte LF-Empfangsschaltung zum Empfangen von im LF-Frequenzbereich gesendeten LF-Wecksignalen und zur Ausgabe eines Wecksignals an den Mikrocontroller aufweist.

Ferner bezieht sich die Erfindung auf ein Verfahren zum energiesparenden Betreiben eines solchen tragbaren Identifikationsgebers.

Derartige tragbare Identifikationsgeber, auch elektronische Schlüssel oder ID-Geber genannt, dienen dazu, einem Inhaber oder Träger des Identifikationsgebers den Zugang zu einem Kraftfahrzeug oder ein Verriegeln des Kraftfahrzeugs zu ermöglichen, ohne dass der Benutzer aktiv Eingabetasten des Identifikationsgebers betätigen muss. Der Bediener braucht den Identifikationsgeber nur mit sich zu führen (beispielsweise in der Bekleidung oder einer mitgeführten Tasche).

Diese Funktionalitäten werden als "Passive Keyless-Entry" oder "Keyless-go" bezeichnet. Im Gegensatz zur konventionellen Fernbedienung ist bei der "Passive Keyless-Entry-Funktionalität" keine aktive Bedienung des mobilen Identifikationsgebers zur Ver- und Entriegelung (Sicherung und Entsicherung) der Schließvorrichtung oder zur Entsperrung der Wegfahrsperre notwendig. Beispielsweise wird bei der Betätigung des Türgriffes des Kraftfahrzeuges eine Kommunikation zwischen dem Kraftfahrzeug und dem Identifikationsgeber gestartet und bei positiver Identifikationsprüfung (Authentifikation) die elektrische Entriegelung der Schließvorrichtung aktiviert. Das bedeutet, dass der einen gültigen Identifikationsgeber mitführende Benutzer sein Kraftfahrzeug öffnen kann, ohne aktiv den Identifikationsgeber betätigen zu müssen.

Das Dokument DE 10 2010 017493 A1 offenbart einen ID-Geber mit einer Spulenanordnung, deren Spulen in drei Raumrichtungen orientiert sind. Der ID-Geber weist einen Pufferspeicher auf, welcher durch Energie der elektromagnetischen Signale geladen wird.

Bei einem gewünschten Zutritt zu einem Fahrzeug ergibt sich beispielsweise folgender Ablauf: Der den Identifikationsgeber mit sich führende Benutzer nähert sich der Fahrertür des Kraftfahrzeugs an und hintergreift beispielsweise einen Türgriff. In diesem Moment wird die Annäherung des Benutzers oder das Hintergreifen des Türgriffs von einem an der Tür angebrachten Sensor (beispielsweise von einem im Türgriff montierten kapazitiven Annäherungssensor) erfasst und einem kraftfahrzeugseitigen Steuergerät gemeldet. Selbstverständlich würde eine solche Erfassung und Meldung eines sich annähernden Benutzers auch dann vorgenommen werden, wenn der Benutzer nicht berechtigt ist, also keinen passenden Identifikationsgeber mit sich führt. Eine Annäherungserfassung und entsprechende Meldung wäre auch dann denkbar, wenn irgendein anderer Körper sich in bestimmter Weise an den Sensor annähert. Deshalb ist eine Zugangsberechtigung zu prüfen, bevor von dem kraftfahrzeugseitigen Steuergerät die Tür entriegelt und eine Betätigung des Türgriffs zum Öffnen der Tür freigegeben wird. Zu diesem Zweck findet ein mittels Austausch von Funksignalen ausgeführter Dialog zwischen dem kraftfahrzeugseitigen Steuergerät und einem in dem Identifikationsgeber enthaltenen Mikrocontroller statt. Dieser Dialog könnte grundsätzlich mit einem HF-Anfrage-Signal seitens des kraftfahrzeitseitigen Steuergeräts beginnen und mit einem von dem Identifikationsgeber abgestrahlten HF-Antwort-Signal weitergeführt werden. In diesem Fall müsste jedoch der Identifikationsgeber einen ständig aktiven HF-Empfänger enthalten. Ein weiterer Nachteil einer solchen HF-Kommunikation besteht in der Schwierigkeit, einen genau umgrenzten räumlichen Empfangsbereich in der Nähe des Fahrzeugs auszubilden. Um eine Aktivierung des Identifikationsgebers nur dann zu ermöglichen, wenn sich dieser in einem vorgegebenen räumlichen Bereich (benachbart zur Kraftfahrzeugtür) befindet, ist es im Stand der Technik üblich, dass das kraftfahrzeugseitige Steuergerät zunächst über einen LF-Sender mit einer zugehörigen Sendespule ein Wecksignal im LF-Frequenzbereich (z. B. bei 125 kHz) abstrahlt, wobei die Sendespule (beispielsweise im Türgriff) so angeordnet ist, dass sich ein vorgegebener Abstrahlbereich um den Türgriff herum von beispielsweise wenigen Metern ergibt. Der Identifikationsgeber andererseits wird mit einem zugehörigen LF-Empfänger ausgerüstet, der neben LF-Verstärkerschaltungen Empfangsspulen umfasst.

Ein Ausgang des LF-Empfängers ist mit einem Eingang des Mikrocontrollers gekoppelt. Wenn sich nun der bei dem Benutzer befindliche, mit einer LF-Empfangsschaltung ausgerüstete Identifikationsgeber dann, wenn der Benutzer auf den Türgriff zugreift, zugleich im Abstrahlbereich der LF-Sendespule des kraftfahrzeugseitigen Steuergeräts befindet, so empfängt er ein Wecksignal im LF-Frequenzbereich, welches unmittelbar nach Erfassen des Zugreifens des Bedieners bzw. seiner Annäherung von dem kraftfahrzeugseitigen Steuergerät über die Sendespule abgestrahlt wird. Das empfangene LF-Wecksignal dient dazu, den Mikrocontroller aufzuwecken und diesen programmgesteuert zu veranlassen, den HF-Signal-Dialog mit dem kraftfahrzeugseitigen Steuergerät zu beginnen. Deshalb kann der Mikrocontroller und können die HF-Sende- und -Empfangsschaltungen in einem Ruhezustand niedrigen Energieverbrauchs heruntergeschaltet bleiben. Allerdings muss die LF-Empfangsschaltung ständig eingeschaltet (aktiv) bleiben, um für den Empfang des Wecksignals bereitzustehen.

Da diese ständige Bereitschaft der LF-Empfangsschaltung zu einem Energieverbrauch und somit zur Entladung der Batterie des Identifikationsgebers führt, wurde in der Patentanmeldung DE 10 2010 036 787.7 vorgeschlagen, die LF-Empfangsschaltungen nicht ständig eingeschaltet zu lassen, sondern nur in vorgegebenen Abständen kurzzeitig zu aktivieren.

Außerdem ist aus der EP 0808971 bekannt, einen tragbaren Sendeempfänger mit einem Bewegungsschalter zu versehen.

Trotz dieser vorgeschlagenen Maßnahme entlädt sich allerdings bei herkömmlichen ID-Gebern eine Spannungsquelle bei Nichtbenutzung. Insbesondere wenn ein ID-Geber vor der Auslieferung und Kopplung mit einem Fahrzeug nach der Fertigung längere Zeit unbenutzt gelagert wird, kann der Fall auftreten, dass die Batterie erheblich entladen ist, wenn der ID-Geber zur Auslieferung kommt. Außerdem können solche ID-Geber nach Herstellung in einem aktivierten Betrieb unerwünschte Wechselwirkungen mit der Umgebung, z.B. bei Transport oder bei Lagerung zeigen.

Der Erfindung liegt die Aufgabe zugrunde, den Energiespeicher des tragbaren Identifikationsgebers in solchen Zeiten, in denen der Identifikationsgeber nicht genutzt wird, insbesondere bevor er erstmalig in Betrieb genommen wird, zu schonen.

Diese Aufgabe wird erfindungsgemäß durch einen tragbaren Identifikationsgeber für ein passives Zugangssystem eines Kraftfahrzeugs mit den Merkmalen des Anspruchs 1 gelöst. Ferner wird diese Aufgabe durch ein Verfahren mit den Merkmalen des Anspruchs 8 gelöst.

Der erfindungsgemäße Identifikationsgeber für ein passives Zugangssystem eines Kraftfahrzeugs weist in einem Gehäuse eine Versorgungsbatterie, einen Mikrocontroller, von dem Mikrocontroller gesteuerte HF-Sende- und -Empfangsschaltungen zur Kommunikation mit einem kraftfahrzeugseitigen Steuergerät, eine mit dem Mikrocontroller gekoppelte LF-Empfangsschaltung mit LF-Empfangsspulen zum Empfangen von im LF-Frequenzbereich gesendeten LF-Wecksignalen und zur Ausgabe eines Wecksignals an den Mikrocontroller auf.

Mit der LF-Empfangsschaltung ist ein Pufferspeicher für elektrische Energie gekoppelt. Der Pufferspeicher kann bei Kopplung der LF-Spulen mit einem elektromagnetischen Feld, z.B. bei der Transponderabfrage in einem Abfragefeld in einem KFZ, aufgeladen werden.

Der Pufferspeicher ist mit dem Mikrocontroller gekoppelt, so dass der Mikrocontroller aus dem Pufferspeicher zur Abarbeitung von gespeicherten Anweisungen versorgt werden kann.

Die Versorgungsbatterie ist mit dem Mikrocontroller, ggf. auch mit den übrigen Komponenten über einen elektronischen Schalter (z.B. Mosfet) gekoppelt. Dieser Schalter ist im ursprünglichen Zustand offen, die Versorgungsbatterie ist vom übrigen System getrennt, insbesondere nicht zur Speisung des Mikrocontrollers geschaltet.

Der elektronische Schalter kann unter Ansteuerung durch den Mikrocontroller geschlossen werden, wenn der Pufferspeicher über einen Schwellwert aufgeladen ist. Der Schwellwert ist dabei derart bemessen, dass der Pufferspeicher genügend Energie speichert, um die Abarbeitung der Anweisungen des Microcomputers zum Schalten des elektronischen Schalters und den Schaltvorgang selbst durchzuführen.

Der elektronische Schalter ist dabei derart ausgelegt und angesteuert, dass die Batterie dauerhaft, auch nach Wegfall der Ladung in dem Pufferspeicher und des LF-Feldes mit den übrigen Komponenten des Systems gekoppelt bleibt.

Erfindungsgemäß ist also die LF-Baugruppe zunächst von der Versorgungsbatterie getrennt. Bei Kopplung des Systems mit einem elektromagnetischen Wechselfeld, z.B. in der Wegfahrsperren-Schnittstelle (Immobilizer-Schnittstelle) findet jedoch eine dauerhafte Aktivierung der Spannungsversorgung durch die Versorgungsbatterie statt, indem dem LF-Feld Energie entzogen wird, um den elektronischen Schalter unter Kontrolle des Mikrocontrollers zur Energieversorgung zu schließen.

Ist der Schalter geschlossen, so versorgt die Batterie das System, auch den Mikrocontroller und die Komponenten der HF-Kommunikation, mit Strom. In diesem Zustand bleibt der Schalter zwischen Batterie und Mikrocontroller geschlossen, wobei die ggf. dazu erforderliche Energie der Batterie selbst entnommen wird.

Der ID-Geber ist also nach der Produktion in einem Zustand, in welchem die Batterie durch den elektronischen Schalter von den übrigen Komponenten getrennt ist und keine nennenswerte Entladung stattfinden kann. In diesem Zustand können auch keine störenden elektromagnetischen Felder durch den ID-Geber erzeugt werden, z.B. auf dem Transportweg oder bei Lagerung in Fertigungsbereichen.

Erst wenn der LF-Kreis erstmalig geweckt wird und der Pufferspeicher dabei geladen wird, koppelt die Batterie ein und der Schlüssel steht voll funktionsfähig als Passive-Key zur Verfügung.

Diese Kopplung der Batterie findet üblicherweise spätestens beim Anlernvorgang des ID-Gebers an das Fahrzeug statt. Dann wird der ID-Geber in die Kopplungsschnittstelle des Fahrzeugs eingebracht und es wird für die Freischaltung der Batterie genügend Energie aufgebracht.

In einer bevorzugten Ausführungsform tritt als elektronischer Schalter ein MOSFET verwendet, welcher zwischen Drain- und Source-Anschlüssen eine Schaltstrecke für eine angekoppelte Batterie bildet und dessen Gate vom Mikrocontroller beim Weckvorgang ansteuerbar ist. In einer besonders einfachen Gestaltung wird nach erstmaligem Durchschalten des MOSFET durch Anlegen der geeigneten Steuerspannung aus dem versorgten Kreis der Komponenten zusätzlich eine Leitung gespeist, die wiederum mit dem Gate des MOSFET gekoppelt ist. Auf diese Weise erhält sich der MOSFET in der Durchleitungsstellung durch die Batteriestellung selbst, ist also in diesem Zustand selbsterhaltend.

In diesem Zustand tritt der Schalter jedoch bei Austausch der Batterie ohne Zwischenversorgung wieder in den ursprünglichen Zustand, mit entkoppelter Batterie von übrigen Komponenten. Er müsste dann erneut über die Verbindungsschnittstelle mit dem Kraftfahrzeug freigeschaltet werden.

Eine derartige Selbsthalteschaltung kann jedoch auch auf beliebige andere Weise, wie in der Technik bekannt, realisiert werden.

In einer weiteren Ausführungsform der Erfindung wird der ID-Geber derart ausgelegt, dass der Mikrocontroller bei vorhandener Batterieversorgung die Batterie durch die Aktivierung des elektronischen Schalters trennt, wenn eine vorgegebene Zustandsbedingung erreicht ist.

Diese Zustandsbedingung kann insbesondere durch eine über HF oder LF empfangene Kommunikationsmitteilung veranlasst werden. Wird dem ID-Geber ein entsprechender Befehlssatz übermittelt und im Mikrocontroller ausgewertet, so kann die Batterie gezielt abgekoppelt werden, um beispielsweise nach einem Test des ID-Gebers diesen in den unversorgten und entladungsgeschützten Zustand zu versetzen. Alternativ kann eine Zeitinformation zur Deaktivierung des ID-Gebers führen, wenn dieser beispielsweise mehrere Wochen nicht benutzt wurde. Wird beispielsweise ein Zweitschlüssel in Gestalt eines ID-Gebers gelagert, so wird auf diese Weise die Endladung des ID-Gebers verhindert, er muss lediglich bei Wiederaufnahme der Benutzung einmal in die entsprechende Aufnahme des Kraftfahrzeugs eingeschoben werden, damit eine Aktivierung über den LF-Kreis stattfindet.

Grundsätzlich kann die Entkoppelung der Spannungsversorgung auch bei sicherheitsrelevanten Vorkommnissen deaktiviert werden. Wird beispielsweise ein kompromittierender Datenverkehr auf dem HF-Wege festgestellt, so kann der Schlüssel in den passiven Zustand versetzt werden, aus welchem er lediglich durch die Transponderkoppelung wieder aufgeweckt werden kann.

Vorteilhafte und/oder bevorzugte Weiterbildungen der Erfindung sind in den Unteransprüchen gekennzeichnet.

Im Folgenden wird die Erfindung anhand einer in der Zeichnung dargestellten bevorzugten Ausführungsform näher erläutert. In der Zeichnung zeigt:

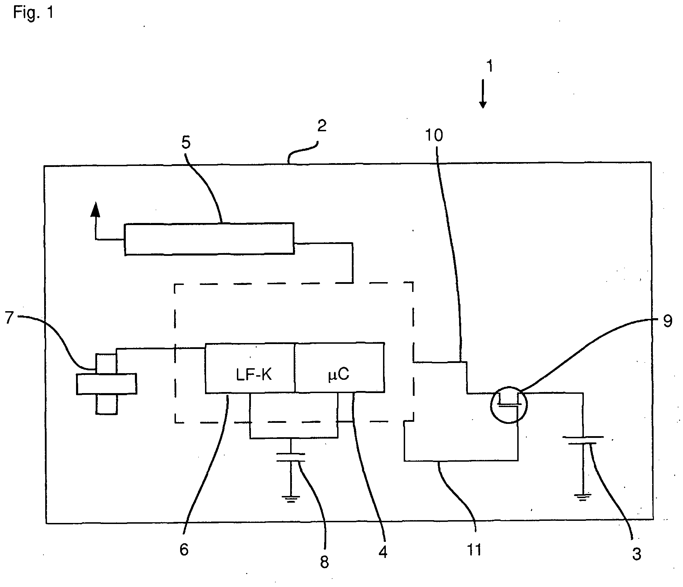

Figur 1 eine schematische Blockdarstellung des erfindungsgemäßen Identifikationsgebers.

Figur 1 zeigt eine schematische Darstellung des erfindungsgemäßen tragbaren Identifikationsgebers 1 für ein passives Zugangssystem eines Kraftfahrzeugs. In einem Gehäuse 2 sind diverse Schaltungskomponenten und eine Versorgungsbatterie 3 untergebracht. Die Schaltungsanordnung umfasst einen Mikrocontroller 4, welcher die üblichen Komponenten enthält, wie beispielsweise einen Mikroprozessor, einen nicht-flüchtigen Speicher für Programme und Konfigurationsdaten, einen flüchtigen Speicher (RAM) für die Datenspeicherung und diverse Eingabe- und Ausgabe-Schnittstellenschaltungen sowie ein diese Komponenten koppelndes internes Bussystem. Zur bidirektionalen Kommunikation mit einem kraftfahrzeugseitigen Steuergerät sind HF-Sende- und -Empfangsschaltungen 5 vorgesehen, die mit Eingabe/Ausgabe-Ports des Mikrocontrollers 4 verbunden sind. Der Empfang der HF-Signale sowie das Abstrahlen der HF-Signale der HF-Sende- und - Empfangsschaltungen 5 erfolgt über eine Antenne. Die Kommunikation zwischen den HF-Sende- und -Empfangsschaltungen 5 mit dem kraftfahrzeugseitigen Steuergerät findet beispielsweise im MHz-Bereich statt. Die Details der Schaltungen 5 sind in Figur 1 nicht näher dargestellt und werden hier auch nicht näher beschrieben, da sie für das Wesen der Erfindung von untergeordneter Bedeutung sind. In Figur 1 ist schematisch ein ID-Geber 1 dargestellt. Der ID-Geber ist mit seinem schematischen inneren Aufbau und den erfindungswesentlichen Teilen gezeigt. Selbstverständlich kann der ID-Geber zusätzliche Funktionselemente, wie z.B. Taster oder mechanische Schließeinrichtungen aufweisen.

Der Identifikationsgeber 1 enthält eine LF-Empfangsschaltung, bestehend aus 3D-Empfangsspulen 7 und eine LF-Kopplungsschaltung (LF-K) 6. Derartige 3D-Spulenanordnungen sind bekannt, z.B. aus der DE 601 07 512 T2. Eine solche LF-Spulenanordnung weist im Wesentlichen orthogonale Spulen in verschiedenen Raumrichtungen auf, welche mit einem Niederfrequenzempfänger (LF-Empfänger) verbunden sind (es ist grundsätzlich auch möglich, mehrere Niederfrequenzempfänger zu verwenden).

Die LF- Kopplungsschaltung ist mit Eingabe-Ports des Mikrocontrollers 4 gekoppelt. Die LF-Kopplungsschaltung dient sowohl zur LF-Kommunikation als auch zur drahtlosen Aufladung des Pufferspeichers 8. Dieser Pufferspeicher ist in diesem Beispiel als Kondensator ausgebildet, welcher eine geeignete Kapazität aufweist, um bei der durch die LF-Kopplungsschaltung bereitgestellten Spannung auf eine Ladung aufgeladen zu werden, die den Mikrocontroller betreiben kann. Die LF-Kopplungsschaltung enthält dazu eine entsprechende Ladeschaltung, welche bei einwirkendem LF-Speisefeld automatisch eine Ladespannung an den Pufferspeicher anlegt.

Es ist bekannt, ID-Geber in Aufnahmen am Kraftfahrzeug einzuschieben oder einzulegen, um auch bei erschöpfter Energiequelle des ID-Gebers die Wegfahrsperre des Fahrzeugs freigeben zu können. Dabei wird über ein Transponderfeld Energie zur Kommunikation in den ID-Geber über die LF-Spulenanordnung 7 übertragen.

Es ist ebenfalls bekannt, Energiespeicher in ID-Gebern durch induktive Koppelung aufzuladen. Die DE 10 2004 023 197 offenbart eine derartige Aufladung des Energiespeichers in einem ID-Geber. Eine solche Aufladung erfolgt z.B. erst, wenn eine erfolgreiche Sicherheitsabfrage des Schlüssels stattgefunden hat (siehe auch US 2002/0209582). Dieselben Konzepte werden hier erfindungsgemäß eingesetzt, um Energie für den Kopplungsvorgang mit der Batterie aus dem LF-Feld abzuziehen und zu speichern.

Ist der Kondensator 8 ausreichend aufgeladen, was durch eine Spannungsüberprüfung verifiziert werden kann, so stellt er Energie bereit, damit der Mikrocontroller 4, welcher Teil der Steuereinrichtung des ID-Gebers ist, den Kopplungsvorgang der Batterie starten kann. Der Mikrocontroller 4 arbeitet eine Befehlsfolge ab, welche das Gate eines MOSFET 9 versorgt und so die im Schlüssel befindliche Spannungsquelle 3 zur Versorgung der Schlüsselbauteile einkoppelt. Sobald diese Versorgung über die Leitung 10 durch Schalten des MOSFET 9 bewirkt ist, ist die Steuereinrichtung unabhängig von dem Pufferspeicher 8 und wird dauerhaft durch die Batterie 3 versorgt. In diesem Zustand der Komplettversorgung durch die Batterie 3 kann der Mikrocontroller auch zur HF-Kommunikation auf das HF-Modul 5 zugreifen und eine entsprechende HF-Kommunikation ausführen. Der Schlüssel ist also aktiviert und nicht mehr auf die Versorgung über die Einkopplung eines elektromagnetischen Feldes in die Spulenanordnung 7 angewiesen. Eine entsprechende Schaltungsanordnung sorgt dafür, dass über die Leitung 11 weiterhin der MOSFET 9 leitend gehalten wird.

Dieser ID-Geber koppelt entsprechend die Batterie 3 erst zur Versorgung der übrigen Komponenten ein, wenn erstmalig ein entsprechender Weckvorgang durch Energieversorgung über die Spulenanordnung 7 stattgefunden hat. Auf diese Weise kann der ID-Geber lange Zeit, sogar jahrelang, ohne nennenswerte Entladung gelagert werden und bei Inbetriebnahme zur vollständigen Funktionsfreischaltung aktiviert werden. Außerdem kann durch eine geeignete Steuerungsmaßnahme über die Steuereinrichtung, insbesondere den Mikrocontroller 4 der elektronische Schalter 9 wieder deaktiviert werden, z.B. wenn für mehrere Wochen oder Monate keine Benutzung des ID-Gebers stattgefunden hat. Dies ist insbesondere vorteilhaft, wenn beispielsweise Reserveschlüssel für Kraftfahrzeuge unbenutzt gelagert werden. Durch den Einschub des Schlüssels in die entsprechende Aufnahme am Kraftfahrzeug wird. das System wieder in den aktiven Zustand gebracht und die Spannungsversorgung eingekoppelt.

Wesentlich ist bei der Erfindung demnach, dass durch eine zeitweise Energieversorgung über die Feldeinkoppelung in die LF-Spulen die Spannungsversorgung des ID-Gebers geweckt wird. Nach diesem Weckvorgang ist das gesamte System unabhängig von einer Energieversorgung über die LF-Spulen.

Die Schalteranordnung 9 kann dabei durchaus auch so eingerichtet sein, dass sie dauerhaft die Einkoppelung der Batterie vornimmt, unabhängig von einer andauernden Ansteuerung des elektronischen Schalters. Die erneute Deaktivierung und Entkoppelung der Batterie von dem System ist lediglich eine vorteilhafte Weiterbildung für dauerhaft unbenutzte ID-Geber.

## Patentansprüche

1. Tragbarer Identifikationsgeber (1) für ein passives Zugangssystem eines Kraftfahrzeugs, der in einem Gehäuse (2) aufweist:
a) eine Versorgungsbatterie (3),
b) einen Mikrocontroller (4),
c) von dem Mikrocontroller (4) gesteuerte HF-Sende- und -Empfangsschaltungen (5) zur Kommunikation mit einem kraftfahrzeugseitigen Steuergerät,
d) eine mit dem Mikrocontroller (4) gekoppelte LF-Schaltungsanordnung (6, 7) mit LF-Antennen (7) zum Einkoppeln von elektromagnetischen Feldern im LF-Frequenzbereich,
e) einen elektrischen Pufferspeicher (8), welcher mit der LF-Schaltungsanordnung (6, 7) gekoppelt ist, um den elektrischen Pufferspeicher durch Energieaufnahme aus über die LF-Antennen eingekoppelten elektromagnetischen Feldern aufzuladen,
**gekennzeichnet durch**,
f) eine elektronische Schalteinrichtung (9), welche die Batterie (3) von dem Mikrocontroller (4) entkoppeln kann,
wobei der Mikrocontroller und die LF-Schaltungsanordnung derart mit dem Pufferspeicher (8) gekoppelt und ausgebildet sind, dass bei Aufladung des Pufferspeichers über ein vorgegebenes Ladungsniveau, die geöffnete elektronische Schalteinrichtung (9) zur Kopplung der Batterie (3) mit dem Mikrocomputer (4) durch den Mikrocontroller und unter Energieversorgung des Mikrocomputers aus dem Pufferspeicher ansteuerbar ist.

2. Tragbarer Identifikationsgeber nach Anspruch 1, wobei der Pufferspeicher (8) ein Kondensator ist.

3. Tragbarer Identifikationsgeber nach Anspruch 1 oder 2, wobei die elektronische Schalteinrichtung (9) einen MOSFET aufweist.

4. Tragbarer Identifikationsgeber nach einem der vorangehenden Ansprüche, wobei eine Selbsthaltungsschaltung vorgesehen ist, welche die leitende Kopplungsstellung der elektronischen Schalteinrichtung (9) aufrecht erhält, sobald der Mikrocomputer (4) die Kopplung der Batterie (3) mit dem Mikrocomputer hergestellt hat.

5. Tragbarer Identifikationsgeber nach einem der vorangehenden Ansprüche, wobei die elektronische Schalteinrichtung (9) zur Öffnung durch den Mikrocomputer ansteuerbar ist und damit die Batterie von dem Mikrocomputer entkoppelbar ist.

6. Tragbarer Identifikationsgeber nach einem der vorangehenden Ansprüche, wobei die Batterie über die elektronische Schalteinrichtung mit weiteren elektronischen Komponenten des Identifikationsgebers gekoppelt ist.

7. Tragbarer Identifikationsgeber nach einem der vorangehenden Ansprüche, wobei vor der Kopplung der Batterie über die elektronische Schalteinrichtung unter Steuerung des Mikrocomputers und unter Versorgung aus dem Pufferspeicher der Mikrocomputer eine Sicherheitsprüfung durchführt, wobei über die LF-Antennen empfangene Daten ausgewertet werden und wobei die Kopplung der Batterie nur bei erfolgreicher Sicherheitsüberprüfung stattfindet.

8. Verfahren zum energiesparenden Betreiben eines tragbaren Identifikationsgebers für ein passives Zugangssystem eines Kraftfahrzeugs, wobei der Identifikationsgeber (1) in einem Gehäuse (2) eine Versorgungsbatterie (3), einen Mikrocontroller (4), von dem Mikrocontroller (4) gesteuerte HF-Sende- und -Empfangsschaltungen (5) zur Kommunikation mit einem kraftfahrzeugseitigen Steuergerät und eine mit dem Mikrocontroller (4) gekoppelte LF-Schaltungsanordnung (6, 7) mit LF-Antennen zum Einkoppeln von elektromagnetischen Feldern im LF-Frequenzbereich aufweist,
aufweisend die Schritte,
Koppeln der LF-Antennen (7) mit einem elektromagnetischen Feld und Aufladen eines elektrischen Pufferspeichers (8), welcher mit der LF-Schaltungsanordnung (6, 7) gekoppelt ist, durch Energieaufnahme aus dem über die LF-Antennen eingekoppelten elektromagnetischen Feld,
**gekennzeichnet durch**,
Koppeln und Betreiben des Mikrocontroller (4) und der LF-Schaltungsanordnung mit dem Pufferspeicher (8) derart, dass bei Aufladung des Pufferspeichers über ein vorgegebenes Ladungsniveau, eine geöffnete elektronische Schalteinrichtung (9) zwischen Batterie (3) und Mikrocomputer (4) zur Kopplung der Batterie mit dem Mikrocomputer durch den Mikrocontroller und unter Energieversorgung des Mikrocomputers aus dem Pufferspeicher angesteuert wird.

9. Verfahren nach Anspruch 8, wobei als Pufferspeicher ein Kondensator als elektronische Schalteinrichtung ein MOSFET verwendet wird.

10. Verfahren nach Anspruch 8 oder 9, wobei die leitende Kopplungsstellung der elektronischen Schalteinrichtung dauerhaft aufrecht erhalten wird, sobald die Kopplung der Batterie mit dem Mikrocomputer hergestellt wurde.

11. Verfahren nach einem der Ansprüche 8 bis 10, wobei vor der Kopplung der Batterie über die elektronische Schalteinrichtung eine Sicherheitsprüfung durchgeführt wird, wobei über die LF-Antennen empfangene Daten ausgewertet werden und wobei die Kopplung der Batterie nur bei erfolgreicher Sicherheitsüberprüfung vorgenommen wird.

## Claims

1. Portable identification transmitter (1) for a passive access system of a motor vehicle comprising, within housing (2):
a) a supply battery (3),
b) a microcontroller (4),
c) HF transmitting and receiving circuits (5) controlled by the microcontroller (4) for communication with a motor-vehicle-side control device,
d) an LF circuit arrangement (6, 7) coupled with the microcontroller (4) with LF antennas (7) for coupling-in electromagnetic fields in the LF frequency range,
e) an electrical buffer (8) that is coupled with the LF circuit arrangement (6, 7) in order to charge the electrical buffer by absorbing energy from electromagnetic fields coupled-in via the LF antennas,
**characterised by**
f) an electronic switching device (9) that can decouple the battery (3) from the microcontroller (4),
wherein the microcontroller and the LF circuit arrangement are configured and coupled with the buffer (8) such that, when the buffer is charged above a specified charging level, the opened electronic switching device (9) can be actuated by the microcontroller in order to couple the battery (3) with the microcomputer (4), with the microcomputer being supplied with energy from the buffer.

2. Portable identification transmitter according to claim 1, wherein the buffer (8) is a capacitor.

3. Portable identification transmitter according to claim 1 or 2, wherein the electronic switching device (9) comprises a MOSFET.

4. Portable identification transmitter according to any one of the preceding claims, wherein a self-holding circuit is provided, which maintains the conductive coupling position of the electronic switching device (9) as soon as the microcomputer (4) has established the coupling of the battery (3) with the microcomputer.

5. Portable identification transmitter according to any one of the preceding claims, wherein the electronic switching device (9) can be actuated by the microcomputer for opening and thus decouple the battery from the microcomputer.

6. Portable identification transmitter according to any one of the preceding claims, wherein the battery is coupled, via the electronic switching device, with further electronic components of the identification transmitter.

7. Portable identification transmitter according to any one of the preceding claims, wherein, before coupling the battery via the electronic switching device, the microcomputer carries out a security check, controlled by the microcomputer and with energy supplied from the buffer, wherein data received via the LF antennas are evaluated and wherein the battery is only coupled in the event of a successful security check.

8. Method for energy-saving operation of a portable identification transmitter for a passive access system of a motor vehicle, wherein the identification transmitter (1) comprises, within housing (2), a supply battery (3), a microcontroller (4), HF transmitting and receiving circuits (5) controlled by the microcontroller (4), for communication with a motor-vehicle-side control device and an LF circuit arrangement (6, 7) coupled with the microcontroller (4) with LF antennas for coupling-in electromagnetic fields in the LF frequency range,
comprising the steps
coupling the LF antennas (7) with an electromagnetic field and charging an electrical buffer (8) that is coupled with the LF circuit arrangement (6, 7) by absorbing energy from the electromagnetic field coupled-in via the LF antennas,
**characterised by**
coupling and operating the microcontroller (4) and the LF circuit arrangement with the buffer (8) such that, when the buffer is charged above a specified charging level, an opened electronic switching device (9) between battery (3) and microcomputer (4) is actuated by the microcontroller in order to couple the battery with the microcomputer, with the microcomputer being supplied with energy from the buffer.

9. Method according to claim 8, wherein a capacitor is used as buffer and a MOSFET is used as electronic switching device.

10. Method according to claim 8 or 9, wherein the conductive coupling position of the electronic switching device is permanently maintained as soon as the coupling of the battery with the microcomputer has been established.

11. Method according to any one of the claims 8 to 10, wherein, before coupling the battery via the electronic switching device, a security check is carried out, wherein data received via the LF antennas are evaluated and wherein the battery is only coupled in the event of a successful security check.

## Revendications

1. Transmetteur d'identification (1) portable pour un système d'accès passif d'un véhicule automobile, qui comporte dans un boîtier (2) :
a) une batterie d'alimentation (3),
b) un microcontrôleur (4),
c) des circuits d'émission et de réception HF (5) commandés par le microcontrôleur (4) afin de communiquer avec un appareil de commande côté véhicule automobile,
d) un ensemble de circuits LF (6, 7) couplé au microcontrôleur (4) et muni d'antennes LF (7) afin d'injecter des champs électromagnétiques situés dans la plage de fréquences LF,
e) un accumulateur tampon électrique (8) qui est couplé à l'ensemble de circuits LF (6, 7) afin de charger l'accumulateur tampon électrique par absorption d'énergie à partir de champs électromagnétiques injectés par l'intermédiaire des antennes LF,
**caractérisé par**
f) un système de commutation (9) électronique, qui peut découpler la batterie (3) du microcontrôleur (4),
dans lequel le microcontrôleur et l'ensemble de circuits LF sont couplés à l'accumulateur tampon (8) et sont réalisés de telle manière que, lors de la charge de l'accumulateur tampon au-delà d'un niveau de charge prédéterminé, le système de commutation (9) électronique ouvert, pour le couplage de la batterie (3) au micro-ordinateur (4), peut être commandé par le microcontrôleur tout en ayant une alimentation en énergie du micro-ordinateur à partir de l'accumulateur tampon.

2. Transmetteur d'identification portable selon la revendication 1, dans lequel l'accumulateur tampon (8) est un condensateur.

3. Transmetteur d'identification portable selon la revendication 1 ou 2, dans lequel le système de commutation (9) électronique présente un MOSFET.

4. Transmetteur d'identification portable selon l'une des revendications précédentes, dans lequel il est prévu un circuit d'auto-entretien, qui conserve la position de couplage conductrice du système de commutation (9) électronique une fois que le micro-ordinateur (4) a établi le couplage de la batterie (3) au micro-ordinateur.

5. Transmetteur d'identification portable selon l'une des revendications précédentes, dans lequel le système de commutation (9) électronique peut être commandé par le micro-ordinateur en vue de l'ouverture et la batterie peut ainsi être découplée du micro-ordinateur.

6. Transmetteur d'identification portable selon l'une des revendications précédentes, dans lequel la batterie est couplée par l'intermédiaire du système de commutation électronique à d'autres composants électroniques du transmetteur d'identification.

7. Transmetteur d'identification portable selon l'une des revendications précédentes, dans lequel, avant le couplage de la batterie par l'intermédiaire du système de commutation électronique avec commande par le micro-ordinateur et avec alimentation à partir de l'accumulateur tampon, le micro-ordinateur effectue une vérification de sécurité, dans lequel des données reçues par l'intermédiaire des antennes LF sont évaluées et dans lequel le couplage de la batterie n'a lieu que si la vérification de sécurité a donné un résultat positif.

8. Procédé pour faire fonctionner dans un mode d'économie d'énergie un transmetteur d'identification portable pour un système d'accès passif d'un véhicule automobile, dans lequel le transmetteur d'identification (1) comportant dans un boîtier (2) une batterie d'alimentation (3), un microcontrôleur (4), des circuits d'émission et de réception HF (5) commandés par le microcontrôleur (4) afin de communiquer avec un appareil de commande côté véhicule automobile et un ensemble de circuits LF (6, 7) couplé au microcontrôleur (4) et muni d'antennes LF afin d'injecter des champs électromagnétiques situés dans la plage de fréquences LF,
comportant les étapes :
- le couplage des antennes LF (7) à un champ électromagnétique et le chargement d'un accumulateur tampon électrique (8), qui est couplé à l'ensemble de circuits LF (6, 7), par absorption d'énergie à partir du champ électromagnétique injecté par l'intermédiaire des antennes LF,
**caractérisé par**
- le couplage et le fonctionnement du microcontrôleur (4) et de l'ensemble de circuits (LF) avec l'accumulateur tampon (8) de telle manière que, lors de la charge de l'accumulateur tampon au-delà d'un niveau de charge prédéterminé, un système de commutation (9) électronique ouvert entre la batterie (3) et le micro-ordinateur (4), pour le couplage de la batterie au micro-ordinateur, est commandé par le microcontrôleur tout en ayant une alimentation en énergie du micro-ordinateur à partir de l'accumulateur tampon.

9. Procédé selon la revendication 8, dans lequel on utilise comme accumulateur tampon un condensateur et comme système de commutation électronique un MOSFET.

10. Procédé selon la revendication 8 ou 9, dans lequel la position de couplage conductrice du système de commutation électronique est maintenue durablement une fois que le couplage de la batterie au micro-ordinateur a été établi.

11. Procédé selon l'une des revendications 8 à 10, dans lequel, avant le couplage de la batterie par l'intermédiaire du système de commutation électronique, on effectue une vérification de sécurité, dans lequel des données reçues par l'intermédiaire des antennes LF sont évaluées et dans lequel le couplage de la batterie n'est effectué que si la vérification de sécurité a donné un résultat positif.
